# EUROPÄISCHE PATENTSCHRIFT

(11) **EP 0 884 819 B1**
(45) Veröffentlichungstag und Bekanntmachung des Hinweises auf die Patenterteilung: **18.06.2008**
(21) Anmeldenummer: 98108695.2
(22) Anmeldetag: 13.05.1998
(51) Int. Cl.: H02J 1/14

(54) **Vorrichtung zur Stromversorgung elektrischer Hochleistungs-Verbraucher in Kraftfahrzeugen**
Power supply device for high power loads in motor vehicles
Dispositif d'alimentation de puissance pour charges à haute puissance dans véhicules automobiles

(30) Priorität: 11.06.1997 DE 19724570
(43) Veröffentlichungstag der Anmeldung: 16.12.1998
(73) Patentinhaber: Bayerische Motoren Werke Aktiengesellschaft, 80788 München (DE)
(72) Erfinder: Lutz, Steffen, 85757 Karlsfeld (DE)

(56) Entgegenhaltungen:
- EP-A- 0 664 598
- US-A- 4 575 679
- US-A- 5 103 147
- US-A- 5 347 209
- US-A- 5 426 589

## Beschreibung

Die Erfindung bezieht sich auf eine Vorrichtung zur Stromversorgung elektrischer Hochleistungs-Verbraucher in Kraftfahrzeugen nach dem Oberbegriff des Patentanspruchs 1.

Zum technischen Hintergrund wird beispielsweise auf die US 5,347,209, die US 5,426,589, die US 4,575 679, die EP 0 664 598 und die US 5,103,147 hingewiesen.

Die Erfindung geht von einer bekannten Stromversorgung elektrischer Hochleistungs-Verbraucher in Kraftfahrzeugen aus, die über einen Generator oder über einen DC/DC-Wandler eine geregelte Spannung für den Betrieb von elektrischen Hochleistungs-Verbrauchern bereitstellt. Wird diese geregelte Spannung nicht über eine Kraftfahrzeugbatterie gepuffert, da beispielsweise der Betrag der geregelten Spannung wesentlich höher als die Nennspannung einer Kraftfahrzeugbatterie ist, entsteht eine hohe Welligkeit der geregelten Versorgungsspannung beim Zu- oder Abschalten der Hochleistungs-Verbraucher. Grund hierfür ist die relativ lange Reaktionszeit des Spannungsreglers eines Generators oder eines DC/DC-Wandlers auf Änderungen seiner Ausgangsspannung.

Um diese Welligkeit der Versorgungsspannung zu verhindern, wird üblicherweise ein Pufferkondensator eingesetzt. Bei einer Stromversorgung von Hochleistungs-Verbrauchern ist wegen der geringen Innenwiderstände der Hochleistungs-Verbraucher und des Spannungsreglers eine hohe Kapazität dieses Pufferkondensators erforderlich. Derartige Pufferkondensatoren mit hoher Kapazität benötigen einen großvolumigen Bauraum, sind teuer und weisen aufgrund der hohen Temperaturen im Motorraum eines Kraftfahrzeugs, in dem sie üblicherweise verbaut werden, nur eine geringe Lebensdauer auf.

Es ist daher Aufgabe der Erfindung, eine Vorrichtung zur Stromversorgung elektrischer Hochleistungs-Verbraucher in Kraftfahrzeugen eingangs genannter Art derart zu verbessern, daß die Kapazität eines notwendigen Pufferkondensators minimiert wird oder auf einen Pufferkondensator vollständig verzichtet werden kann.

Diese Aufgabe wird durch die kennzeichnenden Merkmale des Patentanspruchs 1 gelöst.

Erfindungsgemäß werden elektrische Hochleistungs-Ver-braucher über ein zentrales Steuergerät einzeln zu- bzw. abgeschaltet. Weiterhin ist zwischen dem zentralen Steuergerät und dem Spannungsregler eines Generators oder eines DC/DC-Wandlers eine Informationsverbindung vorgesehen, über die das zentrale Steuergerät das unmittelbar bevorstehende Zu- bzw. Abschalten jedes Hochleistungs-Verbrauchers vorhersagt.

Vorzugsweise sagt das zentrale Steuergerät dem Spannungsregler über die Informationsverbindung sowohl den Zeitpunkt des Zu- bzw. Abschaltens als auch den durch das Zu- bzw. Abschalten eines Hochleistungs-Verbrauchers zu erwartenden Lastsprung vorher.

Durch die erfindungsgemäße Vorhersage des Zu- bzw. Abschaltens jedes Hochleistungs-Verbrauchers kann der Spannungsregler eine entsprechende Regelung bereits einleiten, bevor der jeweilige Hochleistungs-Verbraucher tatsächlich zu- bzw. abgeschaltet wird. Hierdurch wird die Reaktionszeit eines Spannungsreglers wesentlich verkürzt und somit die Welligkeit seiner Ausgangsspannung auf einen Wert verringert, wodurch ein wesentlich kleinerer Pufferkondensator erforderlich wird. Gegebenenfalls kann sogar auf den Einsatz eines Pufferkondensators verzichtet werden. Ein kleinerer Pufferkondensator erspart Bauraum und Kosten und kann durch den kleineren benötigten Bauraum an einem Ort des Kraftfahrzeugs untergebracht werden, an dem günstigere Temperaturverhältnisse als im Motorraum herrschen. Hierdurch wird auch die Lebensdauer und die Zuverlässigkeit des gesamten Stromversorgungssystems erhöht.

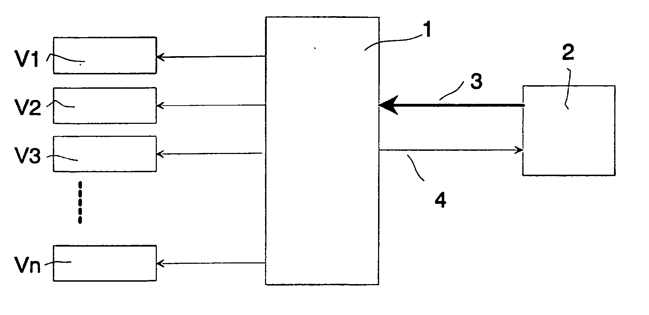

In der Zeichnung ist ein Ausführungsbeispiel der Erfindung dargestellt. Sie zeigt die erfindungsgemäße Vorrichtung zur Stromversorgung mit einer Gruppe elektrischer Hochleistungs-Verbraucher, einem zentralen Steuergerät und einem Spannungsregler eines (hier nicht dargestellten) Generators oder DC/DC-Wandlers.

Mit einem zentralen Steuergerät 1 ist eine Gruppe von elektrischen Hochleistungs-Verbrauchem V1, V2, V3 bis Vn verbunden. Zwischen dem zentralen Steuergerät 1 und einem Spannungsregler 2 eines hier nicht dargestellten Generators oder DC/DC-Wandlers ist zum einen eine Energieleitung 3 vom Spannungsregler 2 zum zentralen (elektronischen) Steuergerät 1 und zum anderen eine Informationsverbindung 4, z. B. in Form einer Schnittstellenleitung, vorgesehen. Die Energieleitung 3 und die Informationsverbindung 4 können aber auch mittels eines Busses oder drahtlos realisiert sein.

Das zentrale elektronische Steuergerät 1 weist vorzugsweise einen Speicher, elektrische Anschlüsse für Eingangssignale und einen Mikroprozessor auf, wodurch das Steuergerät 1 ermitteln kann, zu welchem Zeitpunkt, z.B. abhängig vom Vorliegen bestimmter Eingangssignale, welcher der elektrischen Hochleistungs-Verbraucher V1 bis Vn zu- oder abgeschaltet werden muß. Beispielsweise wird im zentralen Steuergerät 1 die Information, welcher Hochleistungs-Verbraucher V1, V2, V3 oder Vn in nächster Zukunft (z. B. in 50 ms) zu- oder abgeschaltet wird, zu einer Lastsprung-Information aufbereitet. Diese Lastsprung-Information wird über die Informationsverbindung 4, z. B. in Form eines analogen oder pulsweitenmodulierten Signals, an den Spannungsregler 2 zur Regelung der Stromversorgung übertragen. Der Spannungsregler 2 leitet die Regelung des zu erwartenden Lastsprunges aufgrund dieser Information ein, bevor der Lastsprung tatsächlich auftritt. Die gezielte Stromversorgung eines zuzuschaltenden Hochleistungsverbrauchers wird vorzugsweise über die Energieleitung 3 und über das zentrale Steuergerät 1 vorgenommen.

Dadurch wird die Reaktionszeit des Reglers wesentlich verkürzt und die Welligkeit der Ausgangsspannung auf einen Wert verringert, durch den im besten Fall auf einen Pufferkondensator verzichtet werden kann.

## Patentansprüche

1. Vorrichtung zur Stromversorgung elektrischer Hochleistungsverbraucher in Kraftfahrzeugen, die
- einen Spannungsregler (2) eines Generators oder DC/DC-Wandlers,
- ein zentrales Steuergerät (1) sowie
- eine Informationsverbindung (4) zwischen dem zentralen Steuergerät (1) und dem Spannungsregler (2) umfasst,
**dadurch gekennzeichnet, dass**
- die elektrischen Hochleistungsverbraucher (V1, V2, V3, Vn) über das zentrale Steuergerät (1) zu- bzw. abgeschaltet werden,
- das zentrale Steuergerät (1) ermitteln kann, zu welchem Zeitpunkt abhängig vom Vorliegen bestimmter Eingangssignale, welcher der elektrischen Hochleistungs-Verbraucher (V1, V2, V3, Vn) zu- oder abgeschaltet werden muss,
- und dass weiterhin vom zentralen Steuergerät (1) die Information, welcher Hochleistungsverbraucher in nächster Zukunft zu- oder abgeschaltet wird, über die Informationsverbindung (4) an den Spannungsregler (2) zur Regelung der Stromversorgung übertragen wird.

2. Vorrichtung nach Patentanspruch 1, **dadurch gekennzeichnet, daß** das zentrale Steuergerät (1) die Information, welcher Hochleistungs-Verbraucher (V1, V2, V3, Vn) in nächster Zukunft zu- oder abgeschaltet wird, zu einer Lastsprung-Information aufbereitet, und dass diese Lastsprung-Information über die Informationsverbindung (4) an den Spannungsregler (2) zur Regelung der Stromversorgung übertragen wird.

## Claims

1. A power supply device for high electric power loads in motor vehicles, which
- comprises a voltage regulator (2) of a generator or DC/DC converter,
- a central controller (1) and
- an information connection (4) between the central controller (1) and the voltage regulator (2),
**characterised in that**
- the high electric power loads (V1, V2, V3, Vn) are switched on and off by the central controller (1),
- the central controller (1) can determine at what time, depending on the presence of certain input signals, the high electric power load (V1, V2, V3, Vn) has to be switched on and off,
- and **in that** the information as to which high power load will be switched on or off in the near future is furthermore transmitted from the central controller (1), via the information connection (4) to the voltage regulator (2) to regulate the power supply.

2. A device according to claim 1, **characterised in that** the central controller (1) processes the information as to which high power load (V1, V2, V3, Vn) will be switched on or off in the near future into load step information, and **in that** this load step information is transmitted via the information connection (4) to the voltage regulator (2) to regulate the power supply.

## Revendications

1. Dispositif d'alimentation électrique de charges de forte puissance dans des véhicules automobiles comprenant :
- un régulateur de tension (2) d'un générateur ou d'un transformateur continu/ continu,
- un appareil de commande central (1) et
- une liaison d'informations (4) entre l'appareil de commande central (1) et le régulateur de tension (2),
**caractérisé en ce que**
- les charges électriques de forte puissance (V1, V2, V3, Vn) peuvent être branchées ou coupées par l'appareil de commande central (1),
- l'appareil de commande central (1) peut déterminer à quel instant, en fonction des signaux d'entrée déterminés, présents, laquelle des charges électriques de forte puissance (V1, V2, V3, Vn) doit être branchée ou coupée et
- l'appareil de commande central (1) transmet l'information indiquant la charge de forte puissance qui sera branchée ou coupée dans le futur immédiat, par la liaison de transmission d'informations (4) à destination du régulateur de tension (2) pour réguler l'alimentation électrique.

2. Dispositif selon la revendication 1,
**caractérisé en ce que**
l'appareil de commande central (1) prépare l'information concernant la charge de forte puissance (V1, V2, V3, Vn) qui sera coupée ou branchée dans le futur immédiat, pour avoir une information de changement brusque de charge et
l'information de changement brusque de charge est transmise par la liaison de transmission d'informations (4) au régulateur de tension (2) pour réguler l'alimentation électrique.
